Europäisches Patentamt

European Patent Office

Office européen des brevets

(11) Veröffentlichungsnummer: **0 028 705**
**A1**

(12) # EUROPÄISCHE PATENTANMELDUNG

(21) Anmeldenummer: 80106043.5

(22) Anmeldetag: 06.10.80

(51) Int. Cl.³: **B 23 B 1/00**
**B 23 B 29/24**

(30) Priorität: 25.10.79 DE 2943086

(43) Veröffentlichungstag der Anmeldung:
20.05.81 Patentblatt 81/20

(84) Benannte Vertragsstaaten:
AT CH DE FR GB IT LI SE

(71) Anmelder: Coromant Engineering G.m.b.H.
Am Hinterrot 4
D-6944 Hemsbach(DE)

(72) Erfinder: Bellmann, Bernhard Günter, Dr.-Ing.
Moselstrasse 7
D-6102 Pfungstadt(DE)

(72) Erfinder: Koschwitz, Hans-Peter, Ing. grad.
Mainzerstrasse 32
D-6148 Heppenheim(DE)

(74) Vertreter: Weber, Dieter, Dr. et al,
Patentanwälte Dr. D. Weber und Dipl.-Phys. K. Seiffert
Gustav-Freytag-Strasse 25
D-6200 Wiesbaden 1(DE)

(54) Verfahren zur spanabhebenden Bearbeitung eines rotationssymmetrischen Metallwerkstückes und Vorrichtung zur Durchführung des Verfahrens.

(57) Zur spanabhebenden Bearbeitung eines rotationssymmetrischen Metallwerkstückes (30) werden mehrere Schneidwerkzeuge (2-6) relativ zum Werkstück (30) rotatorisch und translatorisch bewegt, und sie führen mehrere Bearbeitungsoperationen nacheinander durch. Um die Stückfolgezeit von Werkstücken dadurch herabzusetzen, daß die Rüstzeit und die Nebenzeiten verringert werden, folgen erfindungsgemäß in jedem von zwei nacheinander ablaufenden Operationsfolgen die einzelnen Bearbeitungsoperationen ohne Nebenzeiten direkt aufeinander, und die Werkzeuge werden nur vor der ersten und nach der letzten Bearbeitungsoperation der jeweiligen Operationsfolge auf das Werkstück (30) zu- bzw. von diesem wegbewegt. Dazu sind an einem lösbar befestigten Werkzeugblock (1) mehrere Schneidwerkzeuge (2-6) gehalten, ein Spannzeug haltert das Werkstück (30) relativ zu den Schneidwerkzeugen, (2-6) und der Werkzeugblock (1) ist relativ zum Werkstück (30) nur in einer Ebene verschieblich.

Fig.1

Dr. Hans-Heinrich Willrath †
Dr. Dieter Weber
Dipl.-Phys. Klaus Seiffert
PATENTANWÄLTE

D — 6200 WIESBADEN 1
Postfach 6145
Gustav-Freytag-Straße 25
☏ (0 61 21) 37 27 20
Telegrammadresse: WILLPATENT
Telex: 4-186 247
16.9.1980

Coromant Engineering GmbH, Am Hinterrot 4,
6944 Hemsbach

– – – – – – – – – – – – – – – – – – – –

Verfahren zur spanabhebenden Bearbeitung eines
rotationssymmetrischen Metallwerkstückes und
Vorrichtung zur Durchführung des Verfahrens

– – – – – – – – – – – – – – – – – – – –

Die Erfindung betrifft ein Verfahren zur spanabhebenden
Bearbeitung eines rotationssymmetrischen Metallwerkstückes mit mehreren Schneidwerkzeugen, die relativ
zum Werkstück rotatorisch und translatorisch bewegt
werden · und mehrere Bearbeitungsoperationen nacheinander durchführen, und sie bezieht sich auch auf eine
Vorrichtung zur Durchführung des Verfahrens, die einen
lösbar befestigten Werkzeugblock, an dem mehrere Schneidwerkzeuge gehaltert sind, und einen das Werkstück relativ
zu den Schneidwerkzeugen haltendes Spannzeug aufweist.

Zum spanabhebenden Bearbeiten von Metallwerkstücken sind

Drehbänke und Fräsmaschinen bekannt, bei denen zwischen Werkstück und Werkzeug eine rotatorische und translatorische Bewegung über entsprechende Antriebe vorgesehen ist. Bei der Serien- und Massenfertigung von Metallwerkstücken finden aus Kostengründen auch schon Vielmeißeldrehbänke Anwendung. Es gibt aber auch schon Revolverdrehbänke für die Bearbeitung von Teilen in Massenfertigung, die sich besonders bei einer größeren Anzahl stirnseitig angreifender Werkzeuge bewährt haben. Während des Betriebes kommen mehrere Werkzeuge nacheinander in Eingriff, wodurch man das Werkstück nur einmal spannen muß und dadurch die Nebenzeiten herabsetzen will, z. B. Schlittenrückzug, Schalten, Zustellen. Es ist auch schon bekannt, mehrere Werkzeuge gleichzeitig in Eingriff zu bringen. Der Antrieb wird rasch von einer Drehzahl auf die andere umgeschaltet, meist durch Schaltbewegung des Revolverkopfes betätigt, wenngleich auch Vorwählschaltungen eingesetzt werden. Das Schalten der Spindeldrehzahl ist von der Revolverkopfstellung abhängig und erfolgt durch Setzen von Nocken, die elektrische Kontakte betätigen.

Bekannt sind ferner die konventionellen, kurvengesteuerten Mehrspindelautomaten, die für die Innen- und Außenbearbeitung scheibenförmiger Schmiedeteile der Großserien- und Massenfertigung verwendet werden. Hier hat sich aber gezeigt, daß sich mit Nachteil bei Losgrößen von 1000 Stück pro Los ein zu großer Anteil der Umrüstzeit an der Maschine gegenüber der Produktionszeit ergibt. Das aufwendige Umrüsten verursacht nicht nur lange Stillstandzeiten der Maschine, sondern erfordert auch den Einsatz von qualifizierten Facharbeitern.

Man hat daher schon versucht, diese Stillstandzeiten durch den Einsatz von Maschinen mit numerischer Steuerung, auch in der Massenfertigung, zu reduzieren. Dabei hat man bei mittleren Losgrößen, z. B. den oben genannten 1000 Stück pro Los, eine gewisse Verkürzung der Rüstzeiten erreicht, mußte aber die hohen Anschaffungskosten der komplizierten Maschinen mit den eingebauten numerischen Steuerungen in Kauf nehmen.

Z. B. bedeuten die vorstehenden Probleme bei der Herstellung von Kugellagerringen eine sehr unerwünschte Beschränkung. Man hat zwar durch die teuren, numerisch gesteuerten Bearbeitungsmaschinen die Rüstzeiten verkürzt, steht sich jedoch immer noch dem Nachteil verhältnismäßig langer Nebenzeiten gegenüber. Z. B. hat man bei der Herstellung eines Kugellagerringes mit einem Durchmesser von 75 mm eine Nebenzeit von 2,3 Sekunden zusätzlich zu der Arbeitszeit von 3,9 Sekunden festgestellt, so daß bei diesem Beispiel die gesamte Stückfolgezeit 7,1 Sekunden beträgt.

Der Erfindung liegt daher die Aufgabe zugrunde, ein Verfahren zur spanabhebenden Bearbeitung der eingangs genannten Art sowie eine Vorrichtung zur Durchführung dieses Verfahrens zu schaffen, um die gesamte Stückfolgezeit von Werkstücken dadurch herabzusetzen, daß die Rüstzeit und die Nebenzeiten verringert werden.

Für das Verfahren wird diese Aufgabe erfindungsgemäß dadurch gelöst, daß in jedem von zwei, nacheinander ablaufenden Operationsfolgen die einzelnen Bearbeitungsoperationen ohne Nebenzeiten direkt aufeinanderfolgen und die Werkzeuge nur vor der ersten und nach der letzten Bearbeitsoperation der jeweiligen Operationsfolge auf das Werkstück zu- bzw. von diesem wegbewegt werden. Selbstverständlich muß das jeweilige Werkstück gehaltert, vorzugsweise eingespannt sein, und diese Arbeiten können nur dann durchgeführt werden, wenn die Werkzeuge außer Eingriffsposition gefahren sind. Die erforderlichen Nebenzeiten werden nun erfindungsgemäß dadurch besonders herabgedrückt, daß sie auf das Heranfahren der Werkzeuge zum Werkstück bzw. auf das Wegbewegen des Werkstückes vom Werkzeug bzw. des Werkzeuges vom Werkstück beschränkt werden. Erfindungsgemäß wird vorgeschlagen, innerhalb einer Operationsfolge die einzelnen Bearbeitungsoperationen ohne Nebenzeiten direkt einander anzuschließen. Durch die Aufteilung der Bearbeitung in zwei Hauptoperationsfolgen ist es möglich, die einzelnen von den jeweiligen Schneidwerkzeugen durchgeführten Bearbeitungsoperationen so hintereinander anzuordnen, daß nach Beendigung der ersten Bearbeitungsoperation bereits die zweite Bearbeitungsoperation durch Einsatz des zweiten Schneidwerkzeuges beginnt, am Ende der zweiten Bearbeitungsoperation das zweite Schneidwerkzeug außer Eingriff kommt, gleichzeitig das dritte Schneidwerkzeug mit dem Werkstück in Eingriff gelangt, so daß ohne zwischengeschaltete Nebenzeit sofort und unmittelbar die dritte Bearbeitungsoperation beginnen kann usw. Dieses Arbeitsverfahren erlaubt ein überraschend starkes Verkürzen der Nebenzeiten, das insbesondere bei Großserien- und Massenfertigung zum Tragen kommt, z. B. und insbesondere bei Kugellagerringen.

Bei vorteilhafter weiterer Ausgestaltung der Erfindung ist vorgesehen, daß die für die erste Operationsfolge erforderliche erste Gruppe von Schneidwerkzeugen zueinander unbeweglich fest gehaltert verbleibt, zwischen der ersten und der zweiten Operationsfolge gegen eine zweite Gruppe von Schneidwerkzeugen ausgetauscht wird, währenddessen das Werkstück umgespannt wird, und daß bei der zweiten Operationsfolge die zweite Gruppe von Schneidwerkzeugen ebenfalls zueinander unbeweglich fest verbleibt. Dadurch kann man für ein bestimmtes Werkstück, d. h. einen bestimmten Auftrag, einmalig voreingestellte Schneidwerkzeuge verwenden, wobei für eine erste Operationsfolge eine erste Gruppe von Schneidwerkzeugen und für eine zweite Operationsfolge eine zweite Gruppe ausgewählt und während des Betriebes außerhalb der Maschine voreingestellt wird. Diese Gruppen verbleiben in sich unbeweglich fest gehaltert, und beim Umschalten von der ersten Operationsfolge auf die zweite braucht man lediglich die ganze erste Gruppe gegen die zweite auszutauschen. Dadurch ergibt sich eine erhebliche Verkürzung der Rüstzeit. Mit Vorteil nutzt man die zum Ausspannen der ersten und Einspannen der zweiten, z. B. jeweils an einem Werkzeugblock angebrachten Gruppe von Schneidwerkzeugen benötigte Zeit aus, um währenddessen auch das Werkstück umzuspannen. In Verbindung mit dem eingangs erwähnten Bearbeitungsbeispiel mit einer gesamten Stückfolgezeit von 7,1 Sekunden ist es nun erfindungsgemäß durch diese Maßnahme möglich, bei einer Nebenzeit von 0,20 Sekunden und einer Arbeitszeit von 2,44 Sekunden eine gesamte Stückfolgezeit von nur 2,64 Sekunden zu erreichen. Durch die Anordnung der Nebenwege bzw. Nebenzeiten lediglich am Anfang und am Ende der jeweiligen Operationsfolge wird also eine beachtliche und in der einschlägigen Branche unerwartete Verringerung der Gesamtbearbeitungszeit erreicht.

Zwar können nun die Bewegungen zwischen der Spindel mit dem Werkstück und dem Schlitten mit dem Werkzeug auf verschiedene Weise aufgeteilt werden; z. B. derart, daß die Spindel rotiert und zusätzlich eine Axialbewegung ausführt, während der Schlitten sich nur radial bewegt; oder es ist auch denkbar, daß sämtliche Bewegungen im Werkzeug liegen und daß das Werkstück stationär steht. Es ist aber erfindungsgemäß zweckmäßig, wenn die jeweilige Gruppe von Schneidwerkzeugen insgesamt im wesentlichen in einer Ebene bewegt wird und das Werkstück an einer festen Stelle gedreht wird. Diese Maßnahmen bedeuten einen erheblich vereinfachten Bewegungsablauf, insbesondere der Schneidwerkzeuge, die - in einer jeweils ersten bzw. zweiten Gruppe zusammengefaßt - insgesamt nur noch zweidimensional bewegt zu werden brauchen. Hierbei ist es besonders bevorzugt, wenn man nur translatorische Bewegungen vorsieht, d. h. fortschreitende, geradlinige Bewegungen, wobei selbstverständlich zwei zueinander senkrechte Bewegungen im Endergebnis auch zu einer gekrümmten Linie eines Punktes am Schneidwerkzeug führen können.

Günstig ist es gemäß der Erfindung auch, wenn das Werkstück im Falle eines scheibenförmigen Schmiedeteils, z. B. eines Kugellagerringes, während der ersten Operationsfolge von außen derart festgespannt ist, daß die erste Gruppe von Schneidwerkzeugen alle Bearbeitungen stufenweise innen, an einer Stirnseite, gegebenenfalls auch für deren beidseitige Fasungen, und teilweise außen vornimmt, und wenn das Schmiedeteil bzw. der Kugellagerring während der zweiten Operationsfolge von innen so festgespannt ist, daß die restlichen Bearbeitungen stufenweise außen erfolgen. Bei der Herstellung eines Kugellagerringes zeigt sich besonders der Vorteil der Aufteilung der Gesamtbearbeitung in zwei Operationsfolgen, weil der Eingriff der Schneidwerkzeuge nur in den Bereichen des Kugellagerringes erfolgen kann, die frei vom Spannwerkzeug sind. Dennoch erreicht man erfindungsgemäß die Bearbeitung aller Flächen, Schultern, Fasungen usw. durch nur einmaliges Umspannen des Kugellagerringes. Ähnliche Vorteile ergeben sich natürlich auch bei anderen scheibenförmigen Schmiedeteilen, z. B. Zahnrädern.

Die Vorrichtung zur Durchführung des Verfahrens weist einen lösbar befestigten Werkzeugblock auf, an dem mehrere Schneidwerkzeuge gehaltert sind, und weist ferner ein das Werkstück relativ zu den Schneidwerkzeugen halterndes Spannzeug auf. Mit einer solchen Vorrichtung wird die vorstehend erwähnte Aufgabe gemäß der Erfindung dadurch gelöst, daß der Werkzeugblock relativ zum Werkstück nur in einer Ebene verschieblich ist. Man erkennt den großen Vorteil des vereinfachten Bewegungsablaufes des Werkzeugblockes, wodurch die Nebenzeiten in der erwünschten Weise reduziert werden können; und dies, obwohl die Schneidwerkzeuge gemäß einem weiteren vorteilhaften Merkmal der Erfindung im wesentlichen in einer Ebene nebeneinander am Werkzeugblock befestigt sind, sich also nicht relativ zueinander bewegen. Besonders zweckmäßig ist es dabei erfindungsgemäß ferner, wenn die Schneidwerkzeuge lösbar in Einbauhaltern befestigte Schneideinsätze, vorzugsweise als Wendeplatten, aufweisen. Diese Art der Ausbildung von Schneidwerkzeugen erleichtert das Einrichten, erlaubt eine weitere Reduzierung der Nebenzeiten und verlängert die Einsatzzeit eines Schneideinsatzes insbesondere dann, wenn er als Wendeplatte ausgeführt ist. Je nach dem Einsatzbereich ist es möglich, eine solche Platte 2 bis 8 mal zu wenden, bevor sie weggeworfen werden muß.

Eine bevorzugte Ausführungsform der Erfindung ist weiterhin dadurch gekennzeichnet, daß zwei gegeneinander austauschbare Werkzeugblöcke mit einer ersten bzw. einer zweiten Gruppe von Schneidwerkzeugen vorgesehen sind und jede Gruppe mindestens zwei im Abstand voneinander befindliche Schneidwerkzeuge aufweist. Man braucht für ein spezielles Werkstück also nur zwei Werkzeugblöcke, die zuvor außerhalb der Maschine voreingestellt sind. In der ersten Operationsfolge wird der erste Werkzeugblock verwendet, zwischen den beiden Operationsfolgen der erste durch den zweiten Werkzeugblock ausgetauscht, und während der zweiten Operationsfolge der zweite Werkzeugkopf verwendet. Bei einem speziellen, nachfolgend anhand einer bevorzugten Ausführungsform beschriebenen Beispiel aus dem Bereich der Kugellagerringbearbeitung besteht die erste Gruppe von Schneidwerkzeugen aus fünf, die zweite Gruppe aus vier Schneideinsätzen.

Weitere Vorteile, Merkmale und Anwendungsmöglichkeiten der vorliegenden Erfindung ergeben sich aus der folgenden Beschreibung im Zusammenhang mit den Zeichnungen. Es zeigen:

Fig. 1 die Draufsicht auf einen Werkzeugblock zur Bearbeitung eines strichpunktiert gezeigten Werkstückes für die Herstellung eines Kugellagerringes,

Fig. 2 eine Vorderansicht des Werkzeugkopfes der Figur 1, wenn man auf diese von links nach rechts blickt,

Fig. 3 schematisiert die Anordnung der Schneideinsätze in dem Werkzeugblock nach den Fig. 1 und 2,

Fig. 4 die Wege des Werkzeugblockes bei der ersten Operationsfolge,

Fig. 5 einen zweiten Werkzeugblock zur Durchführung der zweiten Operationsfolge in ähnlicher Darstellung wie der erste Werkzeugblock in Figur 1,

Fig. 6 eine Vorderansicht des zweiten Werkzeugblockes gemäß Fig. 5, wenn man von links auf den Werkzeugblock blickt,

Fig. 7 wiederum schematisch ähnlich wie bei Fig. 3 die Anordnung der vier Schneideinsätze, hier des zweiten Werkzeugblockes nach den Fig. 5 und 6,

Fig. 8 eine ähnliche Darstellung wie Fig. 4, d. h. die Bewegungen des zweiten Werkzeugblockes, und

Fig. 9 eine Schnittansicht des Metallwerkstückes, welches im vorliegenden Falle ein Kugellagerring ist, und zwar im bereits fertig bearbeiteten Zustand mit durchgezogenen Linien bzw. Rohzustand mit strichpunktierten Linien.

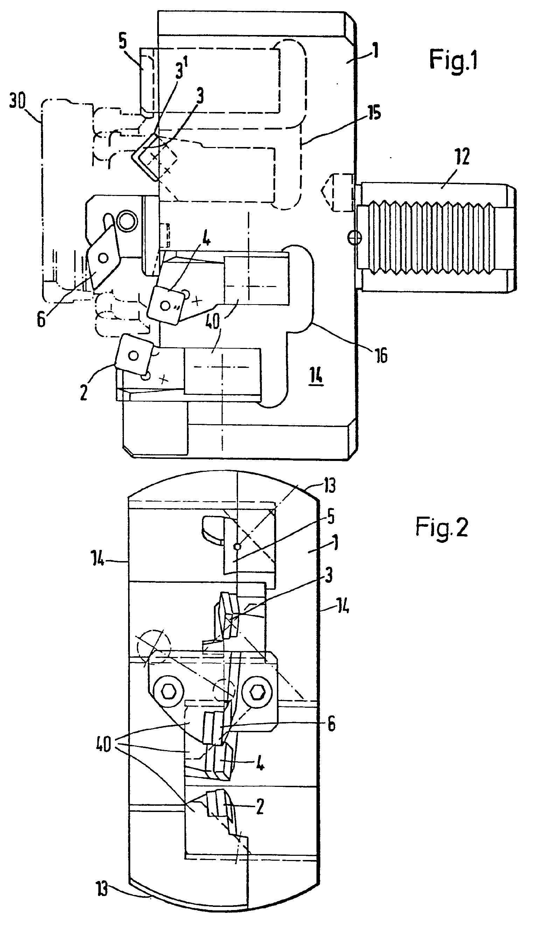

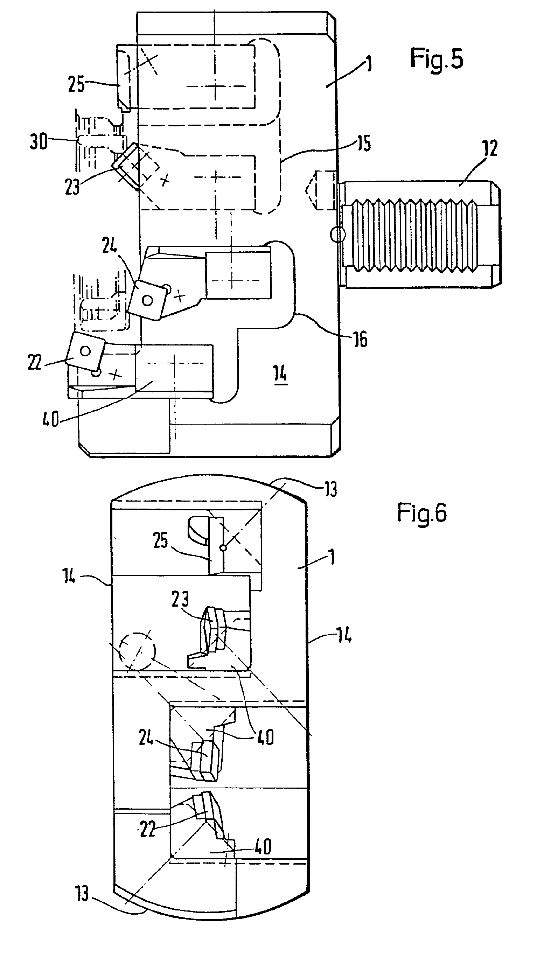

Gleiche Teile sind in verschiedenen Figuren mit gleichen Bezugszahlen versehen. Der Werkzeugblock 1 ist über seinen Zylinderschaft 12 lösbar an der Bearbeitungsvorrichtung, d. h. der nicht gezeigten Werkzeugmaschine, befestigt. Da der Zylinderschaft 12 bei dem ersten Werkzeugblock nach den Fig. 1 und 2 der gleiche ist wie bei dem zweiten nach den Fig. 5 und 6, sind die beiden Werkzeugblöcke ohne weiteres gegeneinander austauschbar. Wie man aus den Fig. 2 und 6 erkennt, haben sie gewölbte Seitenflächen 13 und ebene obere und untere Flächen 14 mit entsprechenden Ausnehmungen, welche durch die Linien 15 und 16 in den Fig. 1 und 5 gezeigt sind.

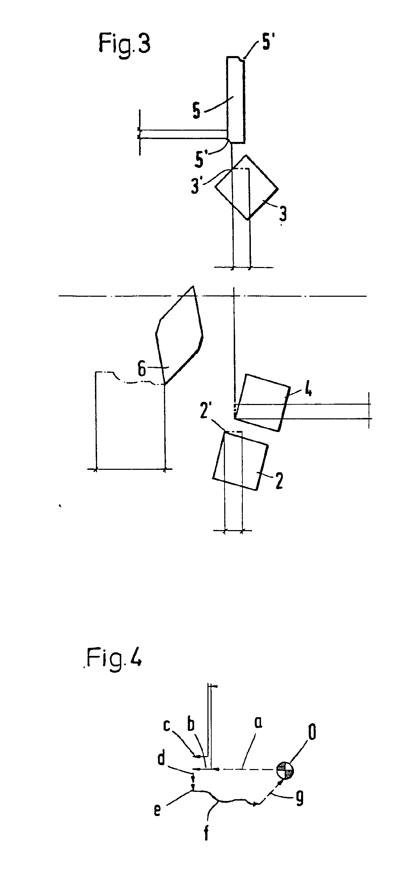

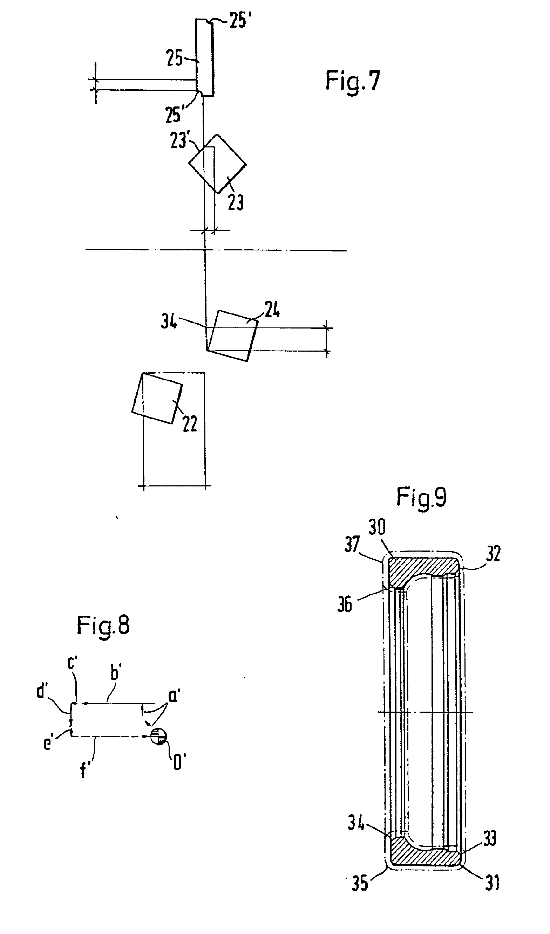

In diesen Ausnehmungen befinden sich die als Schneideinsätze 2 bis 6 sowie 22 und 25 ausgebildeten Schneidwerkzeuge. Außer den quadratischen Schneideinsätzen 2 bis 4 sowie 22 und 24 gibt es in der in Figur 3 gezeigten ersten Gruppe auch einen als rhombische Wendeplatte ausgebildeten Schneideinsatz 6 sowie zum Rundfasen als Wendeschneidplatte mit zwei Schneidecken 5' bzw. 25' ausgebildete Schneideinsätze 5 bzw. 25. Es versteht sich, daß die erste Gruppe der Schneideinsätze 2 bis 6 nach Figur 3 dem ersten Werkzeugblock 1 nach den Fig. 1 und 2 und die zweite Gruppe von Schneideinsätzen 22 bis 25 gemäß Figur 7 dem zweiten Werkzeugblock 1 gemäß Fig. 5 und 6 zugeordnet sind.

Blickt man von vorn auf den jeweiligen Werkzeugblock 1 gemäß den Fig. 2 und 6, dann erkennt man, daß die in den Schneidbereich gelangenden Spitzen bzw. Kanten der Schneideinsätze 2 bis 6 bzw. 22 bis 25 etwa in einer Ebene liegen, die sich in den Fig. 2 und 6 als in der Mitte liegende, von oben nach unten verlaufende gedachte Gerade darstellen würde. Dadurch erhält man definierte Eingriffsbereiche am Werkstück, insbesondere wenn man den Werkzeugblock 1 in einer Ebene bezüglich des in Figur 9 gezeigten, allgemein mit 30 bezeichneten Werkstückes, insbesondere Kugellagerringes, belegt.

Die Schneideinsätze sind in Einbauhaltern 4o lösbar befestigt, die ersichtlich jeweils in festem Abstand vonein-

ander am Werkzeugblock 1 angebracht 'sind. In den Einbauhaltern 4o sind die plattenförmigen Schneideinsätze 2 bis 4 und 6 sowie 22 bis 24 schwach geneigt zu den ebenen Flächen 14 angeordnet. Dabei liegen die mit dem Kugellagerring 3O bzw. dem Werkstück in Eingriff gelangenden Spitzen und Kanten der Schneideinsätze 2, 4 und 6 (der ersten Gruppe) bzw. 22 und 24 tiefer als die dem jeweiligen Einbauhalter 4o zugewandten Seiten, während die für die Rundfasungen zuständigen Schneideinsätze 5 bzw. 25 etwa parallel zu den Ebenen 14 angeordnet sind. Bei den Schneideinsätzen 3 bzw. 23 zeigt die vom Werkzeugblock 1 fortweisende Ecke sogar zum jeweiligen Einbauhalter 4o bzw. dem Grund der Ausnehmung hin.

Nach der Beschreibung des Werkzeuges wird nun der Betrieb der Vorrichtung in Verbindung mit dem herzustellenden Kugellagerring 3O beschrieben, der in den Fig. 1 und 5 strichpunktiert angedeutet ist.

Nach dem erstmaligen Anordnen und Voreinstellen der ersten Gruppe von Schneideinsätzen 2 bis 6 sowie der zweiten Gruppe 22 bis 25 liegen zwei gegeneinander austauschbare, mit fünf bzw. vier Schneideinsätzen bestückte Werkzeugblöcke 1 vor. Das Metallwerkstück hat zunächst die in Fig. 9 mit strichpunktierten Linien gezeigte Rohform. Da ein Kugellagerring sowohl außen als auch innen bearbeitet sein muß, wird die gesamte Bearbeitung gemäß der Erfindung in zwei Folgen aufgeteilt, wobei die erste Operationsfolge anhand Figur 4 mit einem Werkzeug gemäß den Fig. 1 bis 3 und die zweite Operationsfolge anhand Fig. 8 mit einem Werkzeug gemäß den Fig. 5 bis 7 erläutert wird.

Zunächst wird das Werkstück von außen, gemäß der Darstellung der Fig. 9 von links eingespannt. Der erste Werkzeugblock 1 mit der ersten Gruppe von Schneideinsätzen 2 bis 6 beginnt zunächst vom Punkt O der Figur 4 entlang dem gestrichelten Pfeil a nach links im Eilgang "vor" auf das rotierende Werkstück 30 zuzufahren. An der Spitze des Pfeiles a hat der Schneideinsatz 2 die Stelle 31 am Werkstück gemäß Figur 9 erreicht und beginnt ohne Nebenzeit unmittelbar mit der Bearbeitung, wobei die Schneidecke 2' den Weg des Pfeiles b in Fig. 4 durchläuft, so daß dann die in Fig. 1 unten links strichpunktiert gezeigte Position des entstehenden Kugellagerringes 30 erreicht ist. Diese Bearbeitung war das Längsdrehen. Kurz nach Beginn des Längsdrehens hat außerdem die schräggestellte, gerade Schneidkante 3' des Schneideinsatzes 3, nämlich zu Beginn des Pfeiles c in Figur 4 die Position 32 an dem entstehenden Kugellagerring 30 gemäß Fig. 9 erreicht und erstellt die gerade, in diesem Falle unter 45° angestellte Fase im Verlauf der Bewegung gemäß Pfeil c nach Fig. 4. Es ist zu beachten, daß der Bewegungsablauf gemäß Pfeil c innerhalb der Zeit des Bewegungspfeiles d erfolgt, so daß die für die Erstellung der Fase notwendige Zeit nicht zu anderen Bearbeitungszeiten aufaddiert werden muß. Es ist nun an der Spitze der Pfeile b bzw. c ein teilweises Längsdrehen außen etwa bis zur Mitte der äußeren Ringfläche gemäß der unteren strichpunktiert gezeigten Position des Kugellagerringes 30 in Fig. 1 erreicht.

Wiederum sofort und ohne zwischengeschaltete Nebenzeit beginnt nun das Plandrehen der vorderen, d. h. in Fig. 9 rechts befindlichen Stirnfläche des Kugellagerringes 30 auf dem Wege entlang dem Pfeil d in Figur 4. Der hierzu verwendete Schneideinsatz 4 überfährt dabei die genannte vordere Stirnfläche von einem Punkt 33 bis zu einem Punkt 31 gemäß Figur 9. Jetzt ist die Spitze des Pfeiles d in Figur 4 erreicht. Sofort setzt der Schneideinsatz 5 mit der Rundscheibe 5' gemäß Pfeil e ein und fertigt die an der Stelle 31 in Fig. 9 befindliche Fasenrundung.

Damit sind die bei der ersten Operationsfolge möglichen Arbeiten von außen beendet, und die Schneidspitze des rhombischen Schneideinsatzes 6 hat die Position am Ende des Pfeiles e in Fig. 4 erreicht, d. h. sie steht etwa der Stelle 34 gemäß Fig. 9 gegenüber. Ohne zwischengeschaltete Nebenzeit beginnt also der Schneideinsatz 6 sofort die Bearbeitung von innen, d. h. das Kopieren gemäß dem teilweise gekrümmt gezeigten Pfeil f in Figur 4. Die Krümmung erreicht man dadurch, daß zwei senkrecht zueinander wirkende Antriebe des Werkzeugblockes 1 mit unterschiedlichen Beträgen gleichzeitig wirken. Der Werkzeugblock hat sich nun bei der Betrachtung der Fig. 1 in diejenige Position bewegt, bei der er in Bezug auf den Kugellagerring 3o in der am weitestens links gezeigten Position steht. Die Schneidspitze des Einsatzes 6 hat nun etwa die Stelle 33 am Kugellagerring 3O gemäß Fig. 9 erreicht, d. h. ist an der Spitze des Pfeiles f angelangt. Da nun die Innenbearbeitung abgeschlossen ist, schließt sich eine Bewegung des gesamten Werkzeugblockes 1 entsprechend dem gestrichelten Pfeil g im Eilgang "zurück" an. Die erste Operationsfolge ist beendet.

Der Kugellagerring 3o wird nun aus dem nicht dargestellten Spannzeug gelöst, um 180° gewendet und von einem anderen, ebenfalls nicht dargestellten Spannzeug von innen wieder festgespannt. Gleichzeitig wird der erste Werkzeugblock nach den Fig. 1 und 2 aus der Werkzeugmaschine genommen und durch den zweiten Werkzeugblock 1 nach den Fig. 5 und 6 mit den Schneideinsätzen 22 bis 25 ersetzt. Es beginnt die zweite Operationsfolge, deren Operationen wieder analog anhand Fig. 8 erläutert werden.

Die zweite Operationsfolge beginnt mit dem Eilgang "vor", bei dem der gesamte Werkzeugblock 1 gemäß den gestrichelten Pfeilen a' vom Ausgangs- und Endpunkt O'.ab und auf den herzustellenden Kugellagerring 3O zu fährt. Ist die Spitze des oberen Pfeiles a' erreicht, dann steht der Schneideinsatz 22 mit seiner Spitze an der Stelle 35 des Kugellagerringes 30 gemäß Fig. 9, der nun um 180° umgekehrt stehend zu denken ist. Der Schneideinsatz 22 vollführt das Längsdrehen außen über denjenigen Bereich, der während der ersten Operationsfolge infolge der Spannwerkzeuge nicht bearbeitet werden konnte. Das Längsdrehen erfolgt längs des Pfeiles b' in Figur 8. Wenn dessen Pfeilspitze erreicht ist, hat der Schneideinsatz 22 die in Fig. 5 gezeigte Position erreicht. Das Längsdrehen ist abgeschlossen, und der Schneideinsatz 23, d. h. seine gerade, schräg gestellte Schneidkante 23 ', steht nun an der Stelle 36 des Kugellagerringes 30 gemäß Fig. 9, um längs des Weges gemäß Pfeil c' in Fig. 8 die gerade, um 45° angestellte Fase innen hinten zu formen. An der Spitze des Pfeiles c' hat der Schneideinsatz 23 die in Fig. 5 gezeigte Position erreicht.

In diesem Augenblick steht die Spitze des Schneideinsatzes 24 etwa an der Stelle 34 des Kugellagerringes 30 gemäß Fig. 9, die zur Verdeutlichung auch noch in Fig. 7 als Stellung 34 angedeutet ist. Wenn die Spitze des Pfeiles d' in Fig. 8 erreicht ist, ist die hintere Stirnfläche plangedreht.

Nun steht - wieder ohne Nebenzeit - der Schneideinsatz 25 mit seiner Rundschneide 25' an der Stelle 37 gemäß Fig. 9 und besorgt die Rundfase außen hinten. Nach Erreichen der Spitze des Pfeiles e' ist die gesamte Bearbeitung beendet. Der zweite Werkzeugblock 1 fährt nun gemäß dem gestrichelten Pfeil f' in Figur 8 wieder auf die Ausgangsposition 0' zurück, d. h. außer Eingriff von dem nun fertig bearbeiteten Kugellagerring 30.

Die zweite Operationsfolge ist abgeschlossen, der Kugellagerring wird aus dem Spannzeug entfernt, und der Vorgang wiederholt sich von vorn.

# 0028705

Patentansprüche

- - - - - - - - - - - - - - -

1. Verfahren zur spanabhebenden Bearbeitung eines rotationssymmetrischen Metallwerkstückes mit mehreren Schneidwerkzeugen, die relativ zum Werkstück rotatorisch und translatorisch bewegt werden und mehrere Bearbeitungsoperationen nacheinander durchführen, **d a d u r c h   g e k e n n z e i c h n e t ,** daß in jedem von zwei, nacheinander ablaufenden Operationsfolgen die einzelnen Bearbeitungsoperationen ohne Nebenzeiten direkt aufeinanderfolgen und die Werkzeuge nur vor der ersten und nach der letzten Bearbeitungsoperation der jeweiligen Operationsfolge auf das Werkstück zu- bzw. von diesem wegbewegt werden.

2. Verfahren nach Anspruch 1, dadurch gekennzeichnet, daß die für die erste Operationsfolge erforderliche erste Gruppe von Schneidwerkzeugen zueinander unbeweglich fest gehaltert verbleibt, zwischen der ersten und der zweiten Operationsfolge gegen eine zweite Gruppe von Schneidwerkzeugen ausgetauscht wird, währenddessen das Werkstück umgespannt wird und bei der zweiten Operationsfolge die zweite Gruppe von Schneidwerkzeugen ebenfalls zueinander unbeweglich fest verbleibt.

3. Verfahren nach Anspruch 1 oder 2, dadurch gekennzeichnet, daß die jeweilige Gruppe von Schneidwerkzeugen insgesamt im wesentlichen in einer Ebene bewegt wird und das Werkstück an einer festen Stelle gedreht ist.

4. Verfahren nach einem der Ansprüche 1 bis 3, dadurch gekennzeichnet, daß das Werkstück ein scheibenförmiges Schmiedeteil, z. B. ein Kugellagerring ist, der während der ersten Operationsfolge von außen derart festgespannt ist, daß die erste Gruppe von Schneidwerkzeugen alle Bearbeitungen stufenweise innen, an

2

einer Stirnseite, gegebenenfalls auch für deren beidseitige Fasungen, und teilweise außen vornimmt, und daß der Kugellagerring während der zweiten Operationsfolge von innen so festgespannt ist, daß die restlichen Bearbeitungen stufenweise außen erfolgen.

5. Vorrichtung zur Durchführung des Verfahrens nach einem der Ansprüche 1 bis 4 mit einem lösbar befestigten Werkzeugblock, an welchem mehrere Schneidwerkzeuge gehaltert sind, und mit einem das Werkstück raltiv zu den Schneidwerkzeugen haltenden Spannzeug, d a d u r c h   g e k e n n z e i c h n e t ,   daß der Werkzeugblock (1) relativ zum Werkstück (30) nur in einer Ebene verschieblich ist.

6. Vorrichtung nach Anspruch 5, dadurch gekennzeichnet, daß die Schneidwerkzeuge (2-6 und 22-25) im wesentlichen in einer Ebene nebeneinander am Werkzeugblock (1) befestigt sind.

7. Vorrichtung nach Anspruch 5 oder 6, dadurch gekennzeichnet, daß die Schneidwerkzeuge (2-6; 22-25) lösbar in Einbauhaltern (4o) befestigte Schneideinsätze, vorzugsweise als Wendeplatten, aufweisen.

8. Vorrichtung nach einem der Ansprüche 5 bis 7, dadurch gekennzeichnet, daß zwei gegeneinander austauschbare Werkzeugblöcke (1) mit einer ersten bzw. zweiten Gruppe von Schneidwerkzeugen (2-6 bzw. 22-25) vorgesehen sind und jede Gruppe mindestens zwei im Abstand voneinander befindliche Schneidwerkzeuge (2-6 bzw. 22-25) aufweist.

9. Vorrichtung nach einem der Ansprüche 5 bis 8, dadurch gekennzeichnet, daß das Werkstück (30) ein scheibenförmiges Schmiedeteil, z.B. ein Kugellagerring ist und jede Gruppe mindestens zwei Schneidwerkzeuge (2-6;

3

22-25) aufweist.

Fig.1

Fig.2

Fig.3

Fig.4

Fig.5

Fig.6

4/4

Fig.7

25'

25

25'

23'

23

34

24

22

Fig.9

30

37

32

36

34

33

35

31

Fig.8

c'

b'

d'

a'

e'

f'

0'

**Europäisches Patentamt**

# EUROPÄISCHER RECHERCHENBERICHT

Nummer der Anmeldung

**EP 80 10 6043.5**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | WERKSTATT UND BETRIEB, Band 106, Nr. 5, 1973, München <br> V. STERMANN "Tellerradbearbeitung auf verketteten Frontdrehmaschinen" <br> Seiten 300 bis 302 <br> * Seite 300, rechte Spalte "Arbeitablauf" bis Seite 301, linke Spalte; Fig. 2 * <br> -- | 1,3,4 |
| | MASCHINENMARKT, Band 82, Nr. 102, Dezember 1976, Würzburg <br> L. LEISEDER "Kombinationswerkzeuge erhöhen die Wirtschaftlichkeit von Revolver-Drehautomaten" <br> Seiten 1971 bis 1973 <br> * Seite 1972, Fig. 6 bis 9 * <br> -- | 1,5 |
| | TECHNISCHE RUNDSCHAU, Nr. 30, 17. Juli 1973, Bern <br> W. LUTZ "Ausdrehwerkzeuge mit Feineinstellung" <br> Seite 13 <br> * Seite 13, Fig. 8 * <br> -- | 6 |
| P | WERKSTATT UND BETRIEB, Band 113, Nr. 7, 1980, München <br> O. ECKLE "Einbauelemente für den Eigenbau von Werkzeugen" <br> Seiten 451 bis 452 <br> * Seite 452, Fig. 5 * <br> --    ./.. | 6,7 |

**KLASSIFIKATION DER ANMELDUNG (Int. Cl.³)**

B 23 B 1/00
B 23 B 29/24

**RECHERCHIERTE SACHGEBIETE (Int. Cl.³)**

B 23 B 1/00
B 23 B 3/00
B 23 B 5/00
B 23 B 7/00
B 23 B 29/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-02-1981 | MARTIN |

**Europäisches Patentamt**

# EUROPÄISCHER RECHERCHENBERICHT

| EINSCHLÄGIGE DOKUMENTE | | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A | WERKSTATT UND BETRIEB, Band 105, Nr. 12, 1972, München <br> F. HOPPE "Drehen kreuzachsiger Werkstücke" <br> Seiten 859 bis 864 <br> -- | | |
| A | US - A - 3 483 604 (EDWARDS et al.) <br> -- | | |
| A | US - A - 3 732 025 (MILES JR. et al.) <br> -- | | RECHERCHIERTE SACHGEBIETE (Int. Cl.³) |
| A | US - A - 3 346 961 (BULLARD III) <br> -- | | |
| A | US - A - 2 369 014 (BRUNS) <br> ---- | | |

EPA Form 1503.2   06.78